# EUROPÄISCHE PATENTSCHRIFT

(11) **EP 1 435 028 B1**
(45) Veröffentlichungstag und Bekanntmachung des Hinweises auf die Patenterteilung: **15.07.2020**
(21) Anmeldenummer: 02782796.3
(22) Anmeldetag: 26.09.2002
(51) Int. Cl.: G05D 16/20

(54) **DRUCKREGELVENTIL, INSBESONDERE PROPORTIONAL-DRUCKREGELVENTIL**
PRESSURE REGULATING VALVE, IN PARTICULAR PROPORTIONAL PRESSURE REGULATING VALVE
SOUPAPE DE REGULATION DE PRESSION, EN PARTICULIER SOUPAPE DE REGULATION DE PRESSION A ACTION PROPORTIONNELLE

(30) Priorität: 11.10.2001 DE 10150238
(43) Veröffentlichungstag der Anmeldung: 07.07.2004
(73) Patentinhaber: Hydac Fluidtechnik GmbH, 66280 Sulzbach/Saar (DE)
(72) Erfinder: BRUCK, Peter, 66484 Althornbach (DE); HILLESHEIM, Thorsten, 66119 Saarbrücken (DE)
(74) Vertreter: Bartels und Partner, Patentanwälte
(86) Internationale Anmeldenummer: PCT/EP2002/010781
(87) Internationale Veröffentlichungsnummer: WO 2003/034171

(56) Entgegenhaltungen:
- EP-A- 0 451 347
- EP-A- 1 091 131
- US-A- 4 491 153
- US-A- 4 579 145

## Beschreibung

Die Erfindung bezieht sich auf ein Druckregelventil, insbesondere Proportional-Druckregelventil, mit den Merkmalen im Oberbegriff von Anspruch 1.

Ventile dieser Art sind handelsüblich. Dadurch, dass bei derartigen, mittels der zugehörigen Betätigungseinrichtung direkt gesteuerten Druckbegrenzungsventilen auf beiden Kolbenseiten des Ventilkolbens der am Nutzanschluß herrschende Regeldruck wirkt, der Regeldruck somit keine Kraftwirkung auf den Ventilkolben ausübt, ergibt sich der Vorteil, dass für verschiedene, in Frage kommende Druckstufen der gleiche Ventilkolbendurchmesser benutzt werden kann. Mit anderen Worten gesagt, braucht auch bei höheren Druckstufen kein besonders kleiner Ventilkolbendurchmesser gewählt zu werden, um die auftretenden Kolbenkräfte in Grenzen zu halten, so dass derartige Ventile mit ausreichend großem Durchmesser des Ventilkolbens für verhältnismäßig hohe Nennvolumenströme ausgelegt werden können.

Obgleich das Betätigungssystem bei dieser Ventilbauweise von hohen Kolbenkräften unbelastet bleibt, werden die im Betrieb an den Steuerkanten des Ventilkolbens auftretenden Strömungskräfte ungemindert an das Betätigungssystem weiter geleitet. Dies hat die nachteilige Folge, dass die Arbeitskennlinie des Ventils bei der Druckbegrenzungsfunktion einen verhältnismäßig stark ansteigenden und bei der Druckminderfunktion einen stark abfallenden Verlauf besitzt. Diese fallende Charakteristik tritt besonders bei im Vergleich zum Regeldruck sehr hohen Pumpendrücken auf, weil durch den starken Druckabfall an der betreffenden Steuerkante des Ventilkolbens besonders hohe Strömungskräfte auftreten, die den Öffnungshub des Kolbens zu verhindern suchen.

Aus der US 4 491 153 bzw. ihrer deutschen Ursprungsanmeldung DE 31 25 143 C2 geht ein Druckminderventil mit einem Ventilgehäuse mit mindestens einem Pumpen-, Nutz- und Tankanschluß hervor, mit einem im Ventilgehäuse verschiebbar geführten, von einer steuerbaren Betätigungseinrichtung bewegbaren Ventilkolben mit einer an dessen Umfang ausgebildeten Vertiefung, die einen von einer Steuerkante des Kolbens begrenzten umfänglichen Ringraum definiert, und mit einem im Kolben ausgebildeten Durchgang zur Bildung einer Fluidverbindung zwischen der mit dem Druck des Nutzanschlusses beaufschlagten Vorderseite des Kolbens und der an einen rückseitigen Druckraum angrenzenden Rückseite des Kolbens, wobei der Durchgang des Kolbens in dem der Kolbenvorderseite benachbarten Bereich eine Drosselstelle und in einem von der Drosselstelle gegen die Kolbenrückseite hin versetzten Bereich einen zum umfänglichen Ringraum führenden Durchlaß aufweist und dieser Durchlaß eine zweite Drosselstelle aufweist, wobei die eine Steuerkante beim Betrieb des Druckregelventils mit den dem Tankanschluss zugehörigen Wanddurchbrüchen des Ventilgehäuses zusammenwirkt. Bei diesem Dokument wirkt der Ringraum ausschließlich mit dem Tankanschluss zusammen, so daß der Ringraum nur einer Steuerkante und das Ventil keine Druckregelfunktion hat.

Die EP 1 091 131 A1 zeigt ein Druckbegrenzungsventil mit einem Pumpenanschluss und einem kombinierten Nutz- und Tankanschluss sowie einem Steuerdruckanschluss. Es ist eine Ringausnehmung am Kolben vorgesehen, die über Drosselstellen mit den endseitig am Kolben vorgesehenen Steuerräumen verbunden ist. Die Ringausnehmung ist wechselweise mit dem Pumpenanschluss oder dem kombinierten Nutz- und Tankanschluss gekoppelt. An den Endseiten des Kolbens steht daher der Druck in der Ringausnehmung an. Der Kolben ist von einer Betätigungseinrichtung entgegen der Wirkung einer Feder axial verschiebbar.

Ausgehend von diesem Stand der Technik stellt die Erfindung sich die Aufgabe, ein Druckregelventil mit demgegenüber verbessertem Betriebsverhalten zu schaffen.

Bei einem Druckregelventil der eingangs genannten Art ist dieser Aufgabe erfindungsgemäß dadurch gelöst, dass eine weitere Steuerkante bei der Druckminderfunktion mit den den Pumpendruck führenden, dem Pumpenanschluss zugehörigen Wanddurchbrüchen zusammenwirkt
Es ist vorgesehen, dass der Durchgang des Kolbens in dem der Kolbenvorderseite benachbarten Bereich eine Drosselstelle und in einem von der Drosselstelle gegen die Kolbenrückseite hin versetzten Bereich einen zum umfänglichen Ringraum führenden Durchlaß aufweist und dass dieser Durchlaß eine zweite Drosselstelle aufweist.

Die erfindungsgemäß vorgesehene Kombination zweier Drosselstellen, die mit dem Durchgang des Ventilkolbens in Verbindung stehen, ermöglichen es, den auf der Kolbenrückseite herrschenden Druck so zu verändern, dass am Kolben eine Kraft erzeugt wird, die den im Betrieb an den Steuerkanten auftretenden Strömungskräften jeweils entgegenwirkt und somit sowohl bei der Druckbegrenzungsfunktion als auch bei der Druckminderfunktion als Hubhilfe wirksam wird. Durch die geeignete Dimensionierung des Durchtrittsquerschnittes der Drosselstellen läßt sich dadurch die Arbeitskennlinie des Ventils in gewünschter Weise optimieren.

Das dynamische Betriebsverhalten des Ventils läßt sich weiterhin dadurch in gewünschter Weise beeinflussen, dass der Durchgang des Ventilkolbens in dem Bereich zwischen dem zum Ringraum führenden Durchlaß und der Mündung an der Kolbenrückseite eine dritte Drosselstelle aufweist. Durch Auslegung dieser Drosselstelle, beispielsweise in Form einer von der Kolbenrückseite her in den Durchgang des Kolbens eingeschraubten Blende, läßt sich in Verbindung mit dem an die Kolbenrückseite angrenzenden Druckraum eine Dämpfungswirkung zur Schwingungsunterdrückung erzeugen.

Nachstehend ist die Erfindung anhand eines in der Zeichnung dargestellten Ausführungsbeispieles im einzelnen erläutert. Es zeigen:
Fig. 1 einen Längsschnitt eines als Einschraubventil ausgebildeten Ausführungsbeispieles des Druckregelventils und
Fig. 2 einen gegenüber Fig. 1 in etwas größerem Maßstab gezeichneten Längsschnitt des Ventilkolbens des Ausführungsbeispieles.

Bei dem in der Zeichnung dargestellten, hier zu beschreibenden Druckregelventil handelt es sich um ein so genanntes Einschraubventil, dessen hülsenartiges Ventilgehäuse 1 ein Außengewinde 3 aufweist, so dass es in eine Ventilaufnahme einschraubbar ist, die nicht dargestellt ist. Ringförmige Dichtelemente 5, 7 und 9, die außenumfangseitig auf dem Ventilgehäuse 1 sitzen, sind zur Abdichtung gegenüber der Ventilaufnahme vorgesehen. In dem zwischen den Dichtelementen 5 und 7 liegenden Umfangsbereich des Ventilgehäuses 1, welcher durch diese Dichtelemente 5 und 7 gegen den übrigen Umfangbereich des Ventilgehäuses 1 abgedichtet ist, weist das hülsenartige Ventilgehäuse 1 Wanddurchbrüche 11 auf, die bei in die Ventilaufnahme eingeschraubtem Ventilgehäuse 1 mit dem Tankanschluß T des zugehörigen Fluidsystems in Verbindung sind. In dem zwischen den Dichtelementen 7 und 9 liegenden Umfangsbereich weist das Ventilgehäuse ebenfalls Wanddurchbrüche 13 auf, die in entsprechender Weise mit dem Pumpenanschluß P des Fluidsystems verbunden sind. An seinem freien Ende ist das hülsenartige Ventilgehäuse 1 offen, wobei die Hülsenöffnung 15 wiederum über die Ventilaufnahme mit dem den Regeldruck führenden Nutzanschluß A des Systems verbunden ist.

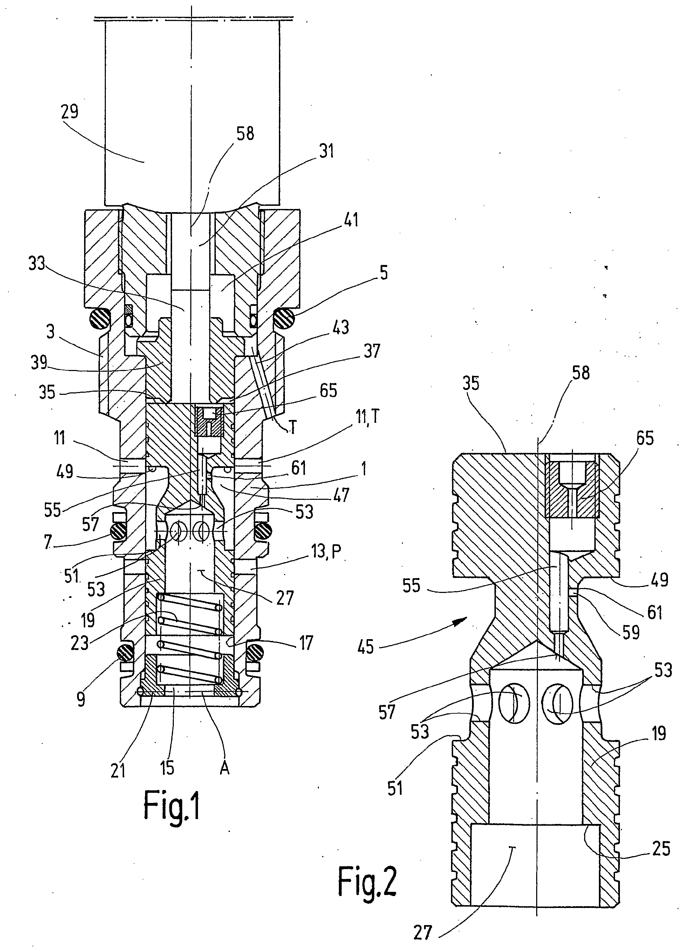

Das Ventilgehäuse 1 bildet im Inneren ein Zylinderrohr 17, in dem ein als Kolbenschieber wirkender Ventilkolben 19 axial verschiebbar geführt ist. Zur Verdeutlichung der Bauweise des Ventilkolbens 19 ist dieser in Fig. 2 in gegenüber Fig. 1 vergrößertem Maßstab gesondert abgebildet.

An der dem Nutzanschluß A zugeordneten Hülsenöffnung 15 ist ein Abstützring 21 festgelegt, der das Widerlager für eine Schrauben-Druckfeder 23 bildet, die sich andererseits an einer Schulter 25 (Fig. 2) in einem inneren Hohlraum 27 des Ventilkolbens 19 stützt. Die Feder 23 erzeugt eine Rückstellkraft, die den Kolben 19 gegen die Magnetkraft eines das Druckregelventil direkt steuernden Magnetsystems 29 zu verschieben sucht.

Das Magnetsystem 29 wirkt mit seinem Magnetanker 31 über einen als Hilfskolben (unten näher beschrieben) dienenden Stiftkörper 33 mechanisch auf die Kolbenrückseite 35 des Ventilkolbens 19 ein.

Die Kolbenrückseite 35 grenzt an einen rückseitigen Druckraum 37 an, der wiederum durch eine als Führung für den Stiftkörper 33 dienende, im Zylinderrohr 17 fest sitzende Büchse 39 begrenzt ist. Das dem Druckraum 37 abgekehrte Ende des Stiftkörpers 33 erstreckt sich in einen dem Magnetsystem 29 nächstgelegenen weiteren Druckraum 41, der über einen Verbindungskanal 43 den Druck des Tankanschlusses T führt, der an den Wanddurchbrüchen 11 des Ventilgehäuses 1 anliegt.

Wie am besten aus Fig. 2 zu ersehen ist, weist der Ventilkolben 19 einen eingeschnürten Umfangsabschnitt 45 auf, der zusammen mit der Wand des Zylinderrohres 17 des Ventilgehäuses einen Ringraum 47 definiert, dessen axiale Erstreckung durch Steuerkanten 49 und 51 begrenzt ist. Die Steuerkante 49 wirkt beim Betrieb des Druckregelventils mit den dem Tankanschluß T zugehörigen Wanddurchbrüchen 11 des Ventilgehäuses 1 zusammen. Die Steuerkante 51 wiederum wirkt bei der Druckminderfunktion mit den den Pumpendruck führenden, dem Pumpenanschluß P zugehörigen Wanddurchbrüchen 13 zusammen. Durchtrittsöffnungen 53, die im eingeschnürten Umfangsbereich 45 des Ventilkolbens 19 ausgebildet sind, stellen die Fluidverbindung zwischen dem den Regeldruck des Nutzanschlusses A führenden inneren Hohlraum 27 des Ventilkolbens 19 und dem Ringraum 47 her.

Ein sich im Ventilkolben 19 axial erstreckender Durchgang 55 bildet eine Fluidverbindung zwischen dem inneren Hohlraum 27 und dem an der Kolbenrückseite 35 befindlichen rückseitigen Druckraum 37, so dass im Stationärzustand der Ventilkolben 19 beidseitig vom Regeldruck des Nutzanschlusses A beauftragt ist, am Ventilkolben 19 also keine vom Regeldruck abhängige Kolben-Verschiebekraft wirkt. Die die Höhe der Druckstufe bestimmende, das Magnetsystem 29 belastende und vom Regeldruck abhängige Kraft wird durch den als Hilfskolben dienenden Stiftkörper 33 erzeugt, welcher am Druckraum 37 regeldruckabhängig und am entgegengesetzten Ende im Druckraum 41 mit dem Druck des Tankanschlusses T beaufschlagt ist. Die das Magnetsystem 29 belastende Kraft ist somit von der wirksamen Kolbenfläche des Stiftkörpers 33, nicht jedoch vom wirksamen Kolbendurchmesser des Ventilkolbens 19 abhängig.

Wie am besten aus Fig. 2 zu ersehen ist, weist der im Ventilkolben 19 axial verlaufende Durchgang 55 Besonderheiten auf, die die Arbeitskennlinie des Druckregelventils wirksam beeinflussen. Wie aus zu Fig. 2 deutlich ersichtlich ist, ist an der Mündung des Durchganges 55 in den inneren Hohlraum 27 des Kolbens 19 eine Drosselstelle 57 ausgebildet, wobei es sich beim dargestellten Ausführungsbeispiel um eine Querschnittsverengung des Durchganges 55 handelt. In dem von der Drosselstelle 57 axial gegen die Kolbenrückseite 35 hin versetzten Bereich des Durchganges 55 weist dieser einen von ihm abzweigenden, zur Längsachse 58 senkrecht verlaufenden Durchlaß 59 auf, der zu dem Ringraum 47 am eingeschnürten Umfangsbereich 45 des Kolbens 19 führt. Dieser Durchlaß 59 bildet eine zweite Drosselstelle 61. Bei dem gezeigten Beispiel sind beide Drosselstellen 57 und 61 durch entsprechend verringerte Bohrungsdurchmesser gebildet, es versteht sich jedoch, dass die Drosselstellen 57, 61 auch durch Belendeneinsätzen oder dergleichen gebildet sein könnten.

Im Betrieb führen die die Fludiströmung im Durchgang 55 beeinflussenden Drosselstellen 57, 61 in Kombination zu einer Modifizierung des an der Kolbenrückseite 35 im Druckraum 37 herrschenden Druckes, und zwar als Funktion des jeweiligen Druckabfalles, der beim Betrieb des Ventils bei dessen Druckminderfunktion an der Steuerkante 51 auftritt und der bei der Druckbegrenzungsfunktion an der Steuerkante 49 auftritt. Der jeweilige starke Druckabfall erzeugt am Ventilkolben 19 sehr hohe Strömungskräfte, die dem jeweils erforderlichen Arbeitshub des Kolbens 19 entgegenwirken. Der im dynamischen Betrieb über die beiden Drosselstellen 57, 61 in Reihenschaltung fließende Fluidstrom führt zu einer Modifizierung des an der Kolbenrückseite 35 im Druckraum 37 herrschenden Drucks. Durch geeignete Dimensionierung der Drosselwirkung der Drosselstellen 57 und 61 läßt sich die Arbeitskennlinie des Ventils so optimieren, dass der jeweils veränderte Druck auf der Kolbenrückseite 35 eine Hubhilfe erzeugt, die den auf den Kolben 19 einwirkenden Strömungskräften bei der Druckminderfunktion und bei der Druckbegrenzungsfunktion jeweils entgegen wirkt.

Beim gezeigten Ausführungsbeispiel ist am Durchgang 55 des Kolbens 19 in dem Bereich zwischen dem Durchlaß 59 und dem Mündungsrand an der Kolbenrückseite 35 eine dritte Drosselstelle vorgesehen. Beim gezeigten Beispiel ist diese durch eine Einschraubblende 65 gebildet. In Zusammenwirkung mit dem an der Kolbenrückseite 35 befindlichen Druckraum 37 läßt sich durch entsprechende Dimensionierung der Drosselwirkung eine Dämpfungswirkung erzeugen. Somit ist durch Variation der Drosselwirkung der Einschraubblende 65 eine wirksame Veränderung der Ventildynamik möglich.

## Patentansprüche

1. Druckregelventil, insbesondere Proportional-Druckregelventil, mit einem Ventilgehäuse (1) mit mindestens einem Pumpen-(P), Nutz- (A) und Tankanschluß (T), mit einem im Ventilgehäuse (1) verschiebbar geführten, von einer steuerbaren Betätigungseinrichtung (29) bewegbaren Ventilkolben (19) mit einer an dessen Umfang (45) ausgebildeten Vertiefung, die einen von mindestens zwei Steuerkanten (49, 51) des Kolbens (19) begrenzten umfänglichen Ringraum (47) definiert, und mit einem im Kolben (19) ausgebildeten Durchgang (55) zur Bildung einer Fluidverbindung zwischen der mit dem Druck des Nutzanschlusses (A) beaufschlagten Vorderseite des Kolbens (19) und der an einen rückseitigen Druckraum (37) angrenzenden Rückseite (35) des Kolbens(19), wobei der Durchgang (55) des Kolbens (19) in dem der Kolbenvorderseite benachbarten Bereich eine erste Drosselstelle (57) und in einem von der Drosselstelle (57) gegen die Kolbenrückseite (35) hin versetzten Bereich einen zum umfänglichen Ringraum (47) führenden Durchlaß (59) aufweist und dieser Durchlaß (59) eine zweite Drosselstelle (61) aufweist, wobei eine Steuerkante (49) beim Betrieb des Druckregelventils mit den dem Tankanschluss (T) zugehörigen Wanddurchbrüchen (11) des Ventilgehäuses (1) zusammenwirkt, wobei eine weitere Steuerkante (51) bei der Druckminderfunktion mit den den Pumpendruck führenden, dem Pumpenanschluss (P) zugehörigen Wanddurchbrüchen (13) zusammenwirkt.

2. Druckregelventil nach Anspruch 1, wobei die Betätigungseinrichtung (29) einen Magnetanker (31) aufweist und dass der Ventilkolben (19) durch die Magnetkraft des Magnetankers (31) gegen eine Rückstellkraft (23) verschiebbar ist.

3. Druckregelventil nach Anspruch 2, wobei der Magnetanker (31) mit dem Ventilkolben (19) über einen Hilfskolben (33) mechanisch gekoppelt ist, der im Ventilgehäuse (1) axial verschiebbar und an seiner dem Ventilkolben (19) zugewandten Seite mit dem Druck des Druckraumes (37) an der Rückseite (35) des Kolbens (19) und an seiner gegenüberliegenden Kolbenseite mit dem Druck des Tankanschlusses (T) beaufschlagt ist.

4. Druckregelventil nach einem der Ansprüche 1 bis wobei der Durchgang (55) des Ventilkolbens (19) in dem Bereich zwischen dem zum Ringraum (47) führenden Durchlaß (59) und der Mündung an der Kolbenrückseite (35) eine dritte Drosselstelle (65) aufweist.

5. Druckregelventil nach Anspruch 4, wobei die dritte Drosselstelle durch eine von der Kolbenrückseite (35) her in den Kolben (19) eingeschraubte Blende (65) gebildet ist.

6. Druckregelventil nach einem der Ansprüche 1 bis wobei die für den Fluiddurchtritt maßgebliche Dimensionierung von der ersten (57) und der zweiten (61) Drosselstelle jeweils im Hinblick auf die Optimierung der Arbeitskennlinie gewählt ist.

7. Druckregelventil nach Anspruch 4 oder 5, wobei die für den Fluiddurchtritt maßgebliche Dimensionierung der dritten Drosselstelle (65) im Hinblick auf eine in Verbindung mit dem Druckraum (37) an der Kolbenrückseite (35) erzeugte Dämpfungswirkung gewählt ist.

8. Druckregelventil nach einem der Ansprüche 1 bis wobei es als Einschraubventil ausgebildet ist und ein Außengewinde (3) zum Einschrauben in eine Ventilaufnahme besitzt.

9. Druckregelventil nach Anspruch 8, wobei das Ventilgehäuse (1) des Druckventils als Einschraubpatrone gestaltet ist und axial zueinander versetzte, mit den Steuerkanten (49, 51) des Kolbens (19) zusammenwirkende Wanddurchbrüche (11 bzw. 13) aufweist, die mit den Pumpendruck bzw. den Tankdruck führenden Anschlüssen der Ventilaufnahme zusammenwirken.

10. Druckregelventil nach Anspruch 9, wobei der Nutzanschluß (A) des Ventilgehäuses (1) am offenen Ende der Einschraubpatrone vorgesehen ist und in einen im Ventilkolben (19) ausgebildeten inneren Hohlraum (27) einmündet, der über Durchtrittsöffnungen (53) mit dem umfänglichen Ringraum (47) in Verbindung steht.

11. Druckregelventil nach den Ansprüchen 3 und 10, wobei eine sich einerseits am offenen Ende des Ventilgehäuses (1) und andererseits am Kolben (19) in dessen innerem Hohlraum (27) abstützende Druckfeder (23) zum Erzeugen der Rückstellkraft vorgesehen ist.

## Claims

1. Pressure-regulating valve, in particular a proportional pressure-regulating valve, comprising a valve housing (1) with at least one pump (P), service (A) and tank connection (T), having a valve piston (19) which is guided such that it can move in the valve housing (1) and capable of being displaced by a controllable actuating device (29) with a recess formed on the periphery (45) of said valve piston, said recess defining a peripheral annular gap (47) delimited by at least two control edges (49, 51) of the piston (19), and with a passage (55) formed in the piston (19) to create a fluidic connection between the front side of the piston (19) to which the pressure of the service connection (A) is applied and the rear side (35 of the piston (19) adjoining a rear pressure chamber (37), wherein the passage (55) in the piston (19) comprises a first throttle point (57) in the region adjoining the front side of the piston and a channel (59) leading to the peripheral annular gap (47) in a region offset from the throttle point (57) towards the rear side (35) of the piston and this passage (59) comprises a second throttle point (61), wherein one control edge (49) interacts with the wall openings (11) in the valve housing (1) which are associated with the tank connection (T) during operation of the pressure-regulating valve, wherein another control edge (51) interacts with the wall openings (13) associated with the pump connection (P) controlling the pump pressure during the pressure-reducing function.

2. Pressure-regulating valve according to claim 1, wherein the actuating device (29) comprises a solenoid armature (31) and the valve piston (19) can be displaced by the magnetic force of the solenoid armature (31) against a resetting force (23).

3. Pressure-regulating valve according to claim 2, wherein the solenoid armature (31) is mechanically coupled to the valve piston (19) by means of an auxiliary piston (33), which can be displaced axially in the valve housing (1) and wherein the pressure in the pressure chamber (37) on the rear side (35) of the piston (19) is applied to its side facing the valve piston (19) and the pressure at the tank connection (T) is applied to its opposite piston side.

4. Pressure-regulating valve according to any one of claims 1 to 2, wherein the passage (55) in the valve piston (19) comprises a third throttle point (65) in the region between the channel (59) leading to the annular gap (47) and the opening on the rear side (35) of the piston.

5. Pressure-regulating valve according to claim 4, wherein the third throttle point is formed by a diaphragm (65) screwed into the piston (19) from the rear side (35) of the piston.

6. Pressure-regulating valve according to any one of claims 1 to 2, wherein the critical dimensions for the fluid to pass from the first (57) and second (61) throttle points are in each case selected with a view to optimising the characteristic operating curve.

7. Pressure-regulating valve according to claim 4 or 5, wherein the critical dimensions for fluid to pass through the third throttle point (65) are selected in order to achieve the damping action generated in conjunction with the pressure chamber (37) on the rear side (35) of the piston.

8. Pressure-regulating valve according to any one of claims 1 to 2, wherein said valve is designed as a screw-in valve and comprises an outer thread (3) for screwing into a valve holder.

9. Pressure-regulating valve according to claim 8, wherein the valve housing (1) of the pressure valve is designed as a screw-in cartridge and comprises wall openings (11 or 13 respectively) interacting with the control edges (49, 51) of the piston (19) and offset **axially** with respect to one another, said wall openings interacting with the connections of the valve holder controlling the pump pressure or the tank pressure respectively.

10. Pressure-regulating valve according to claim 9, wherein the service connection (A) of the valve housing (1) is provided at the open end of the screw-in cartridge and leads into an inner cavity (27) formed in the valve piston (19), said cavity being connected to the peripheral annular gap (47) by means of through openings (53).

11. Pressure-regulating valve according to claims 3 and 10, wherein a compression spring (23) is provided, said spring being supported on the one hand at the open end of the valve housing (1) and on the other hand in the inner cavity (27) of the piston (19) in order to generate the resetting force.

## Revendications

1. Soupape de régulation de la pression, notamment soupape de régulation de la pression à action proportionnelle, comprenant un corps (1) de soupape ayant au moins un raccord (P) de pompe, un raccord (A) utile et un raccord (T) de réservoir, comprenant un piston (19) de soupape, guidé à coulissement dans le corps (1) de la soupape, pouvant être déplacé par un dispositif (29) d'actionnement pouvant être commandé et ayant une cavité qui est constituée sur son pourtour (45) et qui définit un espace (47) annulaire faisant le tour délimité par au moins deux bords (49, 51) de commande du piston (19) et ayant un passage (55) constitué dans le piston (19) pour la formation d'une communication fluidique entre le côté avant, soumis à la pression du raccord (A) utile, du piston (19) et le côté (35) arrière, voisin d'un espace (37) de pression du côté arrière, du piston (19), le passage (55) du piston (19) ayant, dans la région voisine du côté avant du piston, un premier point (57) d'étranglement et, dans une région décalée du point (57) d'étranglement vers le côté (35) arrière du piston, un passage (59) menant à l'espace (47) annulaire faisant le tour et ce passage (59) à un deuxième point d'étranglement, un bord (49) de commande coopérant, lorsque la soupape de régulation de la pression fonctionne, avec les perçages (11) de paroi, associés au raccord (T) de réservoir, du corps (1) de la soupape, dans laquelle un autre bord (51) de commande coopère, pour la fonction de détente de la pression, avec les perçages (13) de paroi conduisant la pression de la pompe et associés au raccord (P) de pompe.

2. Soupape de régulation de la pression suivant la revendication 1, dans laquelle le dispositif (29) d'actionnement a une armature (31) d'aimant et en ce que le piston (19) de la soupape peut coulisser par la force magnétique de la culasse (31) d'aimant à l'encontre d'une force (23) de rappel.

3. Soupape de régulation de la pression suivant la revendication 2, dans laquelle la culasse (31) d'aimant est accouplée mécaniquement au piston (19) de la soupape par un piston (33) auxiliaire, qui peut coulisser axialement dans le corps (1) de la soupape et qui est soumis, sur son côté tourné vers le piston (19) de la soupape, à la pression de l'espace (37) sous pression du côté (35) arrière du piston (19) et, sur son côté de piston opposé, à la pression du raccord (T) de réservoir.

4. Soupape de régulation de la pression suivant l'une des revendications 1 à 3, dans laquelle le passage (55) du piston (19) de la soupape a un troisième point (65) d'étranglement entre le passage (59) menant à l'espace (47) annulaire et l'embouchure du côté (35) arrière du piston.

5. Soupape de régulation de la pression suivant la revendication 4, **caractérisée en ce que** le troisième point d'étranglement est formé par un diaphragme (65) vissé dans le piston (19) par le côté (35) arrière du piston.

6. Soupape de régulation de la pression suivant l'une des revendications 1 à 6, dans laquelle le dimensionnement proportionné au débit de fluide du premier point (57) d'étranglement et du deuxième point (61) d'étranglement est choisi, respectivement, en vue d'optimiser la courbe caractéristique de travail.

7. Soupape de régulation de la pression suivant la revendication 4 ou 5, dans laquelle le dimensionnement proportionné au débit de fluide du troisième point d'étranglement est choisi en vue d'un effet d'amortissement produit en liaison avec l'espace (37) sous pression du côté (35) arrière du piston.

8. Soupape de régulation de la pression suivant l'une des revendications 1 à 7, qui est constituée en soupape de vissage et qui possède un filetage (3) extérieur pour se visser dans un logement de soupape.

9. Soupape de régulation de la pression suivant la revendication 8, dans laquelle le corps (1) de la soupape de régulation de la pression est conformé en cartouche à visser et a des perçages (11 ou 13) de paroi décalés les uns par rapport aux autres et coopérant avec les bords (49, 51) de commande du piston (19), perçages qui coopèrent avec les raccords, conduisant la pression de la pompe ou la pression du réservoir, du logement de la soupape.

10. Soupape de régulation de la pression suivant la revendication 9, dans laquelle le raccord (A) utile du corps (1) de la soupape est prévu à l'extrémité ouverte de la cartouche à visser et débouche dans une cavité (27) intérieure constituée dans le piston (19) de la soupape et communiquant, par des ouvertures (53) de passage, avec l'espace (47) annulaire faisant le tour.

11. Soupape de régulation de la pression suivant les revendication 3 et 10, dans laquelle il est prévu, pour produire la force de rappel, un ressort (23) de compression s'appuyant d'une part sur l'extrémité ouverte du corps (1) de la soupape et d'autre part sur le piston (19) dans sa cavité (27) intérieure.
